# EUROPÄISCHE PATENTSCHRIFT

(11) **EP 2 472 701 B1**
(45) Veröffentlichungstag und Bekanntmachung des Hinweises auf die Patenterteilung: **09.04.2014**
(21) Anmeldenummer: 10197299.0
(22) Anmeldetag: 29.12.2010
(51) Int. Cl.: H02J 7/14, E03D 5/10

(54) **Autarke Energieversorgung einer Spülvorrichtung**
Autonomous energy supply of a flushing device
Alimentation en énergie autarcique d'un dispositif de rinçage

(43) Veröffentlichungstag der Anmeldung: 04.07.2012
(73) Patentinhaber: Geberit International AG, 8645 Jona (CH)
(72) Erfinder: Vass, Christian, 8902 Urdorf (CH); Kuster, Rolf, 8640 Rapperswil (CH)
(74) Vertreter: Liebetanz, Michael

(56) Entgegenhaltungen:
- EP-A2- 0 282 033
- EP-A2- 1 674 624
- US-A- 3 816 805
- US-A- 3 922 592

## Beschreibung

### TECHNISCHES GEBIET

Die vorliegende Erfindung betrifft eine autarke Energieversorgung einer Spülvorrichtung zur Ansteuerung eines elektrisch betätigbaren Wasserventils, mit einer elektrischen Steuerschaltung, mit einem elektrischen Energiespeicher zur Energieversorgung für die elektrische Steuerschaltung, mit einem elektrischen Generator und mit einer Gleichrichterschaltung, wobei der elektrische Generator über die Gleichrichterschaltung mit dem elektrischen Energiespeicher verbunden ist, der wiederum die elektrische Steuerschaltung der Spülvorrichtung versorgt.

### STAND DER TECHNIK

Aus der EP 1 674 624 ist eine autarke Energieversorgung einer Spülvorrichtung bekannt. Eine solche Spülvorrichtung wird von einer elektrischen Steuerschaltung gesteuert, die von einem elektrischen Energiespeicher versorgt wird und die selber ein elektrisch betätigbares Wasserventil ansteuert, mit dem sie verbunden ist. Dabei ist eine im Wasserstrom der Spülvorrichtung angebrachte Turbine vorhanden, die einen elektrischen Generator betreibt, mit dem der elektrische Energiespeicher geladen werden kann, wenn die Spülvorrichtung betätigt wird. In dieser autarken Energieversorgung ist eine Vergleicherschaltung vorgesehen, bei der bei Unterschreiten einer Mindestspannung des elektrischen Energiespeichers eine externe Batterie zugeschaltet wird, um die Energieversorgung der Spülvorrichtung über mehrere Jahre autark zu machen.

Eine elektronische Lösung zur Verlängerung der Standzeit ist aus der EP 0 433 631 bekannt, bei der bei Unterschreiten einer Mindestspannung des dortigen elektrischen Energiespeichers das Wasserventil für eine Spülung zwangsausgelöst wird, so dass sich über die dann durch Selbstauslösung drehende Turbine der elektrische Generator betrieben wird, um den elektrischen Energiespeicher wieder aufzuladen.

Aus dem Stand der Technik sind verschiedene Akkumulatortypen bekannt, insbesondere werden LiFePo₄-Akkumulatoren verwendet, die eine längere Standzeit aufweisen. Dennoch wird für eine höhere Standzeit weiterhin eine externe Batterie oder eine Zwangsspülung verwendet.

Aus der US 4,041,363 ist eine Ladevorrichtung für zwei in Serie geschaltete Akkumulatoren bekannt, bei der ein Alternator und eine Gleichrichterschaltung zwischen der Erde und dem Leistungsabgriff der Batterien geschaltet ist und selektiv an einen Anschluss zwischen den beiden Batterien geschaltet wird.

### DARSTELLUNG DER ERFINDUNG

Ausgehend von diesem Stand der Technik liegt der Erfindung die Aufgabe zugrunde, eine verbesserte, einfachere autarke Energieversorgung einer Spülvorrichtung anzugeben, die insbesondere eine längere Standzeit als die Vorrichtungen des Standes der Technik haben.

Ein weiteres Ziel der Erfindung liegt darin, eine einfachere und sichere Montage einer solchen elektrischen autarken Energieversorgung einer Spülvorrichtung anzugeben. Denn diese wird an die montierten sanitärtechnischen Installationen wie einer berührungslos gesteuerten Armatur, einem berührungslos gesteuerten Urinal oder ähnlichem angebaut und muss für den Monteur einfach zu handhaben sein. Das gleiche gilt für die Nachrüstung bestehender Energieversorgungen von Spülvorrichtungen, wenn also ein älteres, weniger autarkes Modell entfernt und durch ein neues ersetzt werden soll. Dann werden beispielsweise nur die Stecker für den Generator und die Sensorapparatur der Spülvorrichtung der alten Vorrichtung gelöst und die neue eingesteckt. Dann ist es auch ein Ziel der vorliegenden Erfindung, eine einfache Funktionsprüfung zu ermöglichen.

Die erstgenannte Aufgabe wird mit den Merkmalen des Anspruchs 1 gelöst. Eine autarke Energieversorgung einer Spülvorrichtung zur Ansteuerung eines elektrisch betätigbaren Wasserventils verfügt über eine elektrische Steuerschaltung, einen elektrischen Energiespeicher zur Energieversorgung für die elektrische Steuerschaltung, einen elektrischen Generator und eine Gleichrichterschaltung. Dabei ist der elektrische Generator über die Gleichrichterschaltung mit dem elektrischen Energiespeicher verbunden, der wiederum die elektrische Steuerschaltung der Spülvorrichtung versorgt. Der elektrische Energiespeicher umfasst zwei in Serie geschaltete Akkumulatoren, wobei die Gleichrichterschaltung eine Delon-Schaltung ist.

Weitere Ausführungsformen sind in den abhängigen Ansprüchen angegeben. Es ist insbesondere vorteilhaft, eine Anzeigebrücke zwischen einem Anschluss des Generators und einem Ausgang der Gleichrichterbrücke vorzusehen, die über einen Taster verfügt, mit dem ein in Reihe geschalteter optischer und/oder ein akustischer Impulsgeber verbunden ist, so dass bei der Montage die Funktion und der richtige Einsatz der Akkumulatoren sichergestellt werden kann.

### KURZE BESCHREIBUNG DER ZEICHNUNGEN

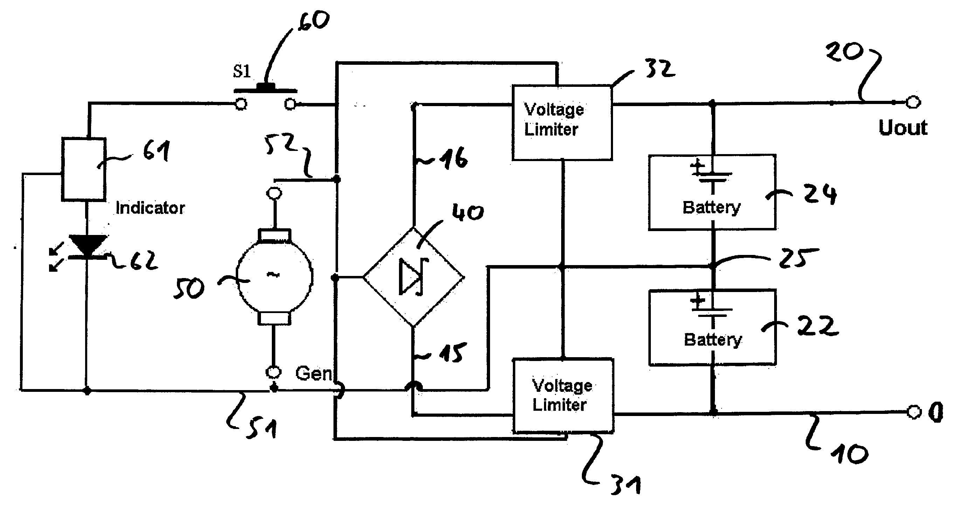

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigt die einzige Figur ein schematisches Blockschaltbild der Schaltungsteile eines Ausführungsbeispiels der Erfindung für eine autarke Energieversorgung einer Spülvorrichtung zur Ansteuerung eines elektrisch betätigbaren Wasserventils.

### BESCHREIBUNG BEVORZUGTER AUSFÜHRUNGSFORMEN

Die in der Zeichnung nicht dargestellte elektrische Steuerschaltung für die Spülvorrichtung wird an den Anschlüssen der Erde 10 und der Versorgungsspannung 20 gegenüber Erde angeschlossen, um von einem elektrischen Energiespeicher versorgt zu werden. Der elektrische Energiespeicher umfasst zwei in Serie geschaltete Akkumulatoren 22 und 24, deren Gesamtspannung für die Versorgung der elektrischen Steuerschaltung und des geschalteten Steuerventils ausreichend ist. Anstelle eines LiFePo₄-Speichers können auch andere Akkumulatoren oder Akkumulatoren in Serie vorgesehen sein.

Eine in dem Wasserstrom der Spülvorrichtung angebrachte Turbine ist mit einem elektrischen Generator 50 zur Stromerzeugung verbunden. Durch einen durch die Spülvorrichtung fliessenden Wasserfluss wird der elektrische Generator 50 betrieben, mit dem der elektrische Energiespeicher geladen werden kann, wenn die Spülvorrichtung betätigt wird.

Der eine Anschluss 51 des Generators 50 ist mit dem Mittelabgriff 25 zwischen den beiden Akkumulatoren 22 und 24 verbunden. Der andere Anschluss 52 ist über eine Gleichrichterbrücke 40 mit den beiden Ausgangsanschlüssen 15 und 16 der Akkumulatoren 22 und 24 verbunden. Die Gleichrichterschaltung 40 ist eine Delon-Schaltung. Im einfachsten Fall ist der eine Anschluss 51 des Generators 50 mit dem Mittelabgriff 25 verbunden, während die Gleichrichterbrücke zwischen den Ausgängen 10 und 20 ist, wobei zwischen diesen Dioden der andere Anschluss 52 des Generators 50 angeschlossen ist.

Jeder Ausgang der Gleichrichterbrücke 40 ist mit den Ausgangsanschlüssen 15 beziehungsweise 16 über einen Spannungsbegrenzer 31 beziehungsweise 32 an Erde 10 und Ausgangsspannung 20 verbunden. Jeder Spannungsbegrenzer 31 beziehungsweise 32 ist zur Referenz mit dem Anschluss 51 des Mittelabgriffs verbunden.

Somit werden beide Halbwellen der durch den Generator 50 erzeugten Spannung direkt ausgenutzt, um zwei in Reihenschaltung angeordnete Akkumulatoren zu laden, so dass eine hohe Ausnützung des erzeugten Ladestroms gegeben ist.

Man kann auch festhalten, dass der Generator 50 näher an seinem Kurzschlussbetrieb betrieben wird. Der abgegebene Strom des Generators 50 erhöht sich dadurch pro Phase und gleichzeitig durch die tiefere Belastungsspannung der Flusswinkel des Stroms für zwei eingesetzte Akkumulatoren 22 und 24 mit dem Mittelabgriff 25 auf den Generator 50. Ferner ist, über einen Taster 60, eine Anzeigebrücke zwischen den Anschlüssen 51 und 52 des Generators 50 geschaltet. Die Anzeigebrücke verfügt über diesen Taster 60, mit dem ein in Reihe geschalteter optischer und/oder akustischer Impulsgeber 62 und eine elektronische Auswerteschaltung 61 verbunden ist, die ab einer vorbestimmten Mindestleistung und damit äquivalenten Mindestladestrom ein Signal an einen Benutzer weitergibt. Bei dem optischen Impulsgeber 62 kann es sich insbesondere um eine LED handeln. Damit ist die Anzeigebrücke aus den Elementen 60, 61 und 62 im normalen Betrieb der autarken Energieversorgung der Spülvorrichtung nicht aktiv. Sie dient vielmehr zur Überprüfung der korrekten Funktion der Installation oder des Generatormoduls. Sie könnte aber auch in einer weiteren Ausgestaltung direkt an den Anschlüssen 51 und 16 verbunden sein, um die Generatorfunktion und den Ladezustand mindestens einer Akkuzelle zu testen.

Bei der dargestellten Ausführungsform, wenn die Akkumulatoren 22 und 24 eingesetzt sind und wenn testweise der Generator durch einen Wasserfluss arbeitet, dann wird bei gedrücktem Taster 60 eine Rückmeldung über die Schaltung 61 und den optischen/akustischen Impulsgeber 62 stattfinden. Wenn diese Rückmeldung nicht stattfindet, dann ist für den die Spülvorrichtungs-Steuerung einbauenden Monteur klar, dass der Generator 50 entweder nicht korrekt mit den Anschlüssen 51 und 52 verbunden ist, der Generator 50 defekt ist oder der Generator 50 nicht ausreichend Ladestrom für eine garantierbare Mindestlebensdauer liefert.

**BEZUGSZEICHENLISTE**

| | | | |
|---|---|---|---|
| 10 | Erde | 32 | Spannungsbegrenzer |
| 15 | positive Ladespannung | 40 | Gleichrichterbrücke |
| 16 | negative Ladespannung | 50 | Generator |
| 20 | Ausgangsspannung | 51 | Anschluss |
| 22 | Akkumulator | 52 | Anschluss |
| 24 | Akkumulator | 60 | Taster |
| 25 | Mittelabgriff | 61 | akustischer Anzeigegeber |
| 31 | Spannungsbegrenzer | 62 | optischer Anzeigegeber |

## Patentansprüche

1. Autarke Energieversorgung einer Spülvorrichtung zur Ansteuerung eines elektrisch betätigbaren Wasserventils, mit einer elektrischen Steuerschaltung, mit einem elektrischen Energiespeicher (22, 24) zur Energieversorgung (20, 10) für die elektrische Steuerschaltung, mit einem elektrischen Generator (50) und mit einer Gleichrichterschaltung (40), wobei der elektrische Generator (50) über die Gleichrichterschaltung (40) mit dem elektrischen Energiespeicher (22, 24) verbunden ist, der wiederum die elektrische Steuerschaltung der Spülvorrichtung versorgt, **dadurch gekennzeichnet, dass** der elektrische Energiespeicher zwei in Serie geschaltete Akkumulatoren (22, 24) umfasst, wobei die Gleichrichterschaltung (40) eine Delon-Schaltung ist, dass ein Anschluss (51) des Generators (50) mit dem Mittelabgriff (25) zwischen den beiden Akkumulatoren (22, 24) verbunden ist und der andere Anschluss (52) über eine Gleichrichterbrücke (40) mit den beiden Ausgangsanschlüssen (15, 16) der Akkumulatoren (22, 24) verbunden ist, sowie dass jeder Ausgang der Gleichrichterbrücke (40) mit den Ausgangsanschlüssen (10, 20) über einen Spannungsbegrenzer (31, 32) verbunden ist.

2. Autarke Energieversorgung gemäss Anspruch 1, **dadurch gekennzeichnet, dass** eine Anzeigebrücke (60, 61, 62) zwischen den Anschlüssen (51, 52) des Generators (50) geschaltet ist.

3. Autarke Energieversorgung gemäss Anspruch 2, **dadurch gekennzeichnet, dass** die Anzeigebrücke über einen Taster (60) verfügt, mit dem ein in Reihe geschalteter Impulsgeber (62) und eine elektronische Auswerteschaltung (61) verbunden ist.

4. Autarke Energieversorgung gemäss Anspruch 3, **dadurch gekennzeichnet, dass** die elektronische Auswerteschaltung (61) ausgestaltet ist, um ab einer vorbestimmten Mindestleistung und/oder ab einem Mindestladestrom ein Signal zu erzeugen, welches durch den Impulsgeber (62) von einem Benutzer wahrnehmbar ist.

5. Autarke Energieversorgung gemäss Anspruch 3 oder 4, **dadurch gekennzeichnet, dass** der Impulsgeber (62) ein optischer Impulsgeber (62) und insbesondere eine LED ist.

6. Autarke Energieversorgung gemäss Anspruch 3, 4 oder 5, **dadurch gekennzeichnet, dass** der Impulsgeber (62) ein akustischer Impulsgeber (62) ist und insbesondere einen Lautsprecher umfasst.

## Claims

1. Autonomous energy supply to a flushing apparatus for actuating an electrically operable water valve, having an electrical control circuit, having an electrical energy store (22, 24) for supplying energy (20, 10) for the electrical control circuit, having an electrical generator (50) and having a rectifier circuit (40), wherein the electrical generator (50) is connected to the electrical energy store (22, 24) by means of the rectifier circuit (40), the said electrical energy store in turn supplying the electrical control circuit of the flushing apparatus, **characterized in that** the electrical energy store comprises two rechargeable batteries (22, 24) which are connected in series, wherein the rectifier circuit (40) is a Delon circuit, **in that** one connection (51) of the generator (50) is connected to the centre tap (25) between the two rechargeable batteries (22, 24), and the other connection (52) is connected to the two output connections (15, 16) of the rechargeable batteries (22, 24) by means of a rectifier bridge (40), and also **in that** each output of the rectifier bridge (40) is connected to the output connections (10, 20) by means of a voltage limiter (31, 32).

2. Autonomous energy supply according to Claim 1, **characterized in that** an indicator bridge (60, 61, 62) is connected between the connections (51, 52) of the generator (50).

3. Autonomous energy supply according to Claim 2, **characterized in that** the indicator bridge has a pushbutton (60) to which a pulse generator (62), which is connected in series, and an electronic evaluation circuit (61) are connected.

4. Autonomous energy supply according to Claim 3, **characterized in that** the electronic evaluation circuit (61) is designed in order to generate a signal starting from a predetermined minimum power and/or starting from a minimum charging current, it being possible for the said signal to be perceived by a user by way of the pulse generator (62).

5. Autonomous energy supply according to Claim 3 or 4, **characterized in that** the pulse generator (62) is an optical pulse generator (62), and in particular an LED.

6. Autonomous energy supply according to Claims 3, 4 and 5, **characterized in that** the pulse generator (62) is an acoustic pulse generator (62), and in particular comprises a loudspeaker.

## Revendications

1. Alimentation en énergie autonome d'un dispositif de rinçage destiné à commander une vanne à eau pouvant être actionnée électriquement, comprenant un circuit de commande électrique, comprenant un accumulateur d'énergie électrique (22, 24) pour l'alimentation en énergie (20, 10) du circuit de commande électrique, comprenant un générateur électrique (50) et comprenant un circuit redresseur (40), le générateur électrique (50) étant relié par le biais du circuit redresseur (40) avec l'accumulateur d'énergie électrique (22, 24), lequel alimente à son tour le circuit de commande électrique du dispositif de rinçage, **caractérisée en ce que** l'accumulateur d'énergie électrique inclut deux accumulateurs (22, 24) branchés en série, le circuit redresseur (40) étant un circuit Delon, **en ce qu'**une borne (51) du générateur (50) est reliée avec la prise centrale (25) entre les deux accumulateurs (22, 24) et l'autre borne (52) est reliée par le biais d'un pont redresseur (40) avec les deux bornes de sortie (15, 16) des accumulateurs (22, 24), et aussi **en ce que** chaque sortie du pont redresseur (40) est reliée avec les bornes de sortie (10, 20) par le biais d'un limiteur de tension (31, 32).

2. Alimentation en énergie autonome selon la revendication 1, **caractérisée en ce qu'**un pont indicateur (60, 61, 62) est branché entre les bornes (51, 52) du générateur (50).

3. Alimentation en énergie autonome selon la revendication 2, **caractérisée en ce que** le pont indicateur dispose d'une touche (60) avec laquelle sont reliés un codeur d'impulsions (62) branché en série ainsi qu'un circuit électronique d'interprétation (61).

4. Alimentation en énergie autonome selon la revendication 3, **caractérisée en ce que** le circuit électronique d'interprétation (61) est conçu pour, à partir d'une puissance minimale prédéfinie et/ou à partir d'un courant de charge minimal, générer un signal qui peut être perçu par un utilisateur par l'intermédiaire du codeur d'impulsions (62).

5. Alimentation en énergie autonome selon la revendication 3 ou 4, **caractérisée en ce que** le codeur d'impulsions (62) est un codeur d'impulsions visuel (62) et notamment une LED.

6. Alimentation en énergie autonome selon la revendication 3, 4 ou 5, **caractérisée en ce que** le codeur d'impulsions (62) est un codeur d'impulsions sonore (62) et comprend notamment un haut-parleur.
